# DEMANDE DE BREVET EUROPEEN

(11) **EP 3 893 368 A1**
(43) Date de publication de la demande: **13.10.2021**
(21) Numéro de dépôt: 21162635.3
(22) Date de dépôt: 15.03.2021
(51) Int. Cl.: H02K 11/25

(54) **UNITÉ DE STATOR DE MACHINE ÉLECTRIQUE TOURNANTE COMPRENANT UN SUPPORT AVEC MOYENS DE FIXATION DU CAPTEUR DE TEMPÉRATURE INTÉGRÉS**

(30) Priorité: 06.04.2020 FR 2003411
(71) Demandeur: VALEO EQUIPEMENTS ELECTRIQUES MOTEUR, 94046 Créteil Cedex (FR)
(72) Inventeur: RIVALS, Alexis, 94046 Créteil Cedex (FR); SQUITIERO, Thomas, 94046 Créteil Cedex (FR)
(74) Mandataire: Valeo Powertrain Systems

(57) **Abrégé**

La présente invention a pour objet une unité de stator de machine électrique tournante comprenant un stator, un capteur de température (1) relié à deux fils électriques (4, 5) et un support (6) sur lequel est fixé le capteur de température (1) par des moyens de fixation (7, 15) comprenant un logement (7) logeant le capteur de température (1). Le logement (7) est délimité par une paroi périphérique (8) de dimensions adaptées pour limiter le déplacement du capteur de température (1).

Selon l'invention, les moyens de fixation (7, 15) comprennent des moyens de blocage (9, 10) immobilisant au moins l'un des deux fils électriques du capteur de température pour bloquer le déplacement du capteur de température par rapport au support (6). Les moyens de fixation (7, 15) sont obtenus lors d'une opération de moulage du support (6) de façon à les intégrer au support (6) et former une pièce unique.

## Description

La présente invention concerne une unité de stator pour machine électrique tournante et une machine électrique tournante comprenant une telle unité de stator.

L'invention se rapporte au domaine des machines électriques tournantes telles que les moteurs électriques, les alternateurs, ou les alterno-démarreurs pour les véhicules automobiles.

L'invention concerne plus précisément des moteurs électriques, de 48V par exemple, positionnés sur la boite de vitesse ou à l'arrière d'un véhicule électrique. Les machines électriques tournantes comprennent une unité de stator comportant un stator muni d'au moins un bobinage en cuivre. Les machines électriques tournantes comprennent également un rotor monté en rotation dans l'unité de stator et par rapport à celle-ci. L'unité de stator comprend un carter protégeant le stator.

L'unité de stator comprend un capteur de température positionné à proximité du bobinage.

Le capteur de température permet de mesurer la température à l'intérieur de la machine électrique pour éviter sa surchauffe.

Il existe des machines électriques d'une puissance de 15kW immergées dans un milieu comprenant de l'huile qui sont refroidies par l'huile pénétrant dans la machine électrique. Le capteur de température est positionné à l'extérieur du bobinage et est en contact avec ce dernier. L'huile permet de fournir un contact thermique entre le bobinage et le capteur de température.

Cependant, la mesure de température n'est pas précise car le contact entre le capteur de température et le bobinage n'est pas identique d'une machine électrique à une autre.

Il existe également des machines électriques d'une puissance de 15kW refroidies à l'eau. L'intérieur de la machine électrique n'est pas en contact de l'eau, ni de l'huile dans ce cas, mais seulement de l'air. Il n'y a donc pas d'huile pour améliorer le contact thermique.

Le capteur de température comprend généralement une sonde de température de type CTN (Coefficient de Température Négatif) ou de type CTP (Coefficient de Température Positif). Ces sondes CTN et CTP sont des thermistances dont la résistance varie en fonction de la température.

Ces sondes de température sont enveloppées dans un embout contenant du polytétrafluoroéthylène (PTFE) pour les protéger.

Certaines pièces de l'unité de stator sont en plastique, comme le dispositif de mesure de position comprenant des capteurs de position mesurant la position du rotor par rapport au stator.

Ceci pose des problèmes de fixation du capteur puisqu'il est difficile de coller du PTFE sur des pièces en plastique. La colle n'adhère pas sur le PTFE.

Il est alors nécessaire d'utiliser des dispositifs de fixation du capteur mécaniques comprenant plusieurs éléments.

Quant aux machines électriques refroidies à l'huile, elles utilisent des dispositifs de fixation comprenant également plusieurs pièces tel qu'un support en plastique sur lequel est fixé le capteur de température.

Ce type de dispositif de fixation nécessite la fabrication de plusieurs pièces et donc une gestion de pièces référencées importantes. Le temps d'assemblage est également important, entrainant des couts importants.

Et puis, lorsque la machine électrique chauffe, les pièces réalisées en différents matériaux (plastique et métal) se dilatent différemment, entrainant des jeux et un risque de décrochage du capteur de température à cause des vibrations de la machine électrique.

L'invention a vise donc à résoudre ces inconvénients de l'art antérieur en proposant une unité de stator de machine électrique tournante comprenant des moyens de fixation permettant de fixer un capteur de température sur un support de l'unité de stator, plus simple à fabriquer et facilitant la fixation du capteur de température.

L'invention concerne une unité de stator pour machine électrique tournante comprenant un stator comportant au moins un bobinage, un capteur de température comprenant une première extrémité reliée à deux fils électriques destinés à être connectés à un dispositif de contrôle, et un support sur lequel est fixé le capteur de température par des moyens de fixation comprenant un logement dans lequel est disposé le capteur de température. Le logement est délimité par une paroi périphérique dont les dimensions par rapport à celles du capteur de température sont choisies pour limiter le déplacement du capteur de température par rapport au support. Les dimensions du logement sont proches de celles du capteur de température.

Selon l'invention, les moyens de fixation comprennent des moyens de blocage immobilisant au moins l'un des deux fils électriques du capteur de température pour bloquer le déplacement du capteur de température par rapport au support. Les moyens de fixation sont obtenus lors d'une opération de moulage du support de façon à les intégrer au support et former une pièce unique.

L'invention fournit ainsi une unité de stator pour machine électrique tournante comprenant des moyens de fixation permettant de fixer un capteur de température sur un support de l'unité de stator, plus simple à fabriquer et facilitant la fixation du capteur de température par des moyens simples.

De tels moyens de fixation du capteur de température sur le support de l'unité de stator peuvent être différents d'un emmanchement en force. Ainsi la fixation du capteur de température est insensible à la dilatation relative entre le capteur de température et le support. La fixation de capteur de température sur le support est donc améliorée.

Les moyens de fixation étant intégrés au support, il n'est plus nécessaire d'utiliser différentes pièces pour fixer le capteur. Le nombre de pièces est ainsi réduit, simplifiant la fabrication (une seule étape de moulage) et réduisant le temps de montage. Le nombre de pièces à gérer est également réduit. Le coût de fabrication est ainsi réduit.

De préférence, l'au moins un fil électrique immobilisé traverse les moyens de fixation de façon à former un chemin de blocage dans lequel l'au moins un fil électrique présente au moins une courbure entrainant un changement d'orientation.

Ceci permet d'entrelacer l'un des fils électriques en formant des chicanes dans les moyens de fixation, entrainant le blocage du fil électrique. Avantageusement, l'au moins un fil électrique immobilisé est entrelacé dans les moyens de fixation de façon à former un chemin de blocage en forme de « S ». Cette forme permet d'optimiser le blocage.

Les moyens de blocage comprennent un premier élément de blocage pour bloquer une première portion de fil.

Le logement et le capteur de température s'étendent suivant une direction longitudinale Z. La paroi périphérique du logement comprend une fente s'étendant suivant la direction longitudinale Z et qui est délimitée par deux bords opposés formant le premier élément de blocage.

Ceci fournit un moyen de blocage simple du fil électrique et du capteur de température.

Les moyens de fixation comprennent un élément de fixation positionné sur le support, l'élément de fixation étant adjacent au logement.

Les moyens de blocage comprennent un deuxième élément de blocage pour bloquer une deuxième portion de fil distante de la première portion de fil.

Ceci permet de fiabiliser davantage le maintien du capteur de température.

Le deuxième élément de blocage comprend un ergot maintenant la deuxième portion de fil bloquée entre une surface d'appui inférieure prévue sur l'élément de fixation et l'ergot.

Ceci fournit un autre moyen de blocage simple.

L'élément de fixation comprend un canal traversé par le fil électrique immobilisé ou bloqué.

Ceci améliore la fixation du fil.

Le logement comprend une première ouverture pour l'insertion du capteur de température. La paroi périphérique du logement est prolongée, suivant la direction longitudinale Z et selon un sens opposé à la première ouverture, par une patte reliée au support et comportant un rebord. Le rebord fait saillie par rapport à la patte de façon à former une butée pour la deuxième extrémité du capteur de température.

Cette solution permet d'améliorer la fixation du capteur suivant la direction longitudinale Z.

En variante, les deux fils électriques forment un faisceau de fils immobilisé par les moyens de blocage.

Selon un mode de réalisation donné, le support est un dispositif de mesure de position comprenant un compartiment de capteur destiné à loger au moins un capteur de position mesurant la position du rotor par rapport au stator. Le dispositif de mesure de position est destiné à être positionné dans une zone d'extrémité axiale du rotor de façon à permettre au capteur de position de détecter une cible en rotation reliée au rotor. Les moyens de fixation et le capteur de température sont positionnés sur le compartiment de capteur.

L'invention permet ainsi de fixer un capteur de température à embout contenant du PTFE sur un dispositif de mesure de position en plastique de manière fiable et rapidement, sans vis, ni colle.

Dans le cas des machines électriques refroidies à l'eau, ceci permet d'obtenir des mesures de température plus précises même dans l'air, le capteur de température étant placé près du rotor.

Il est également possible de fixer d'autres types de capteur de température avec des embouts sans PTFE.

Dans le cas des machines électriques refroidies à l'huile, la mesure est plus fiable, le positionnement du capteur par rapport au bobinage n'étant pas variable d'une machine électrique à une autre.

L'invention concerne également une machine électrique tournante comprenant une unité de stator telle que définie précédemment et un rotor monté en rotation à l'intérieur de l'unité de stator.

Les caractéristiques de l'invention seront décrites plus en détail en se référant aux figures ci-dessous :
- La figure 1 est une représentation schématique d'un support d'unité de stator de machine électrique tournante, et plus particulièrement d'un dispositif de mesure de position, comprenant des moyens de fixation pour fixer un capteur de température sur le support, selon un mode de réalisation de l'invention ;
- La figure 2 est une représentation schématique de ce support avec les moyens de fixation représentés en transparence ;
- La figure 3 est une représentation schématique du capteur de température et plus particulièrement du chemin de fil suivi par l'un des fils du capteur de température ;
- La figure 4 est une représentation schématique, en vue de dessus, des moyens de fixation ;
- La figure 5 est une représentation schématique selon une coupe transversale du support.

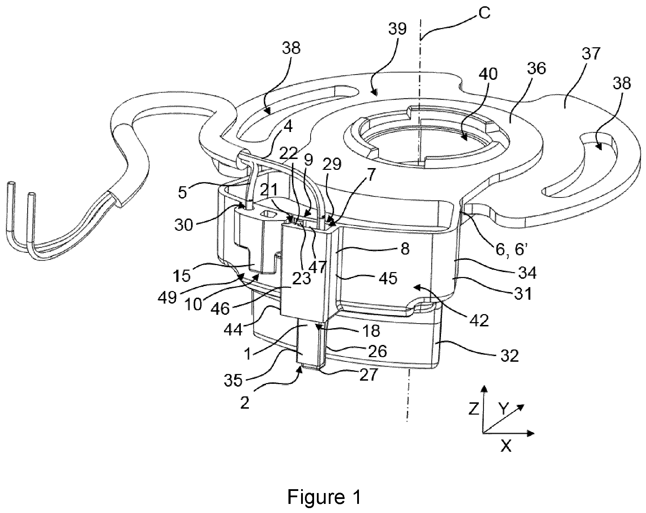

La figure 1 représente schématiquement un support 6 d'unité de stator pour machine électrique tournante, et plus particulièrement un dispositif de mesure de position 6'.

L'unité de stator peut être une unité de stator de moteur électrique positionnée sur la boite de vitesse ou à l'arrière d'un véhicule électrique. Le moteur électrique peut avoir un voltage de 48V et une puissance de 15kW, par exemple. L'invention s'applique également à d'autres types de machine électrique tournante tel qu'un alternateur ou un alterno-démarreur de véhicule automobile. L'unité de stator comprend un stator comportant au moins un bobinage.

On entend par bobinage, une bobine ou plusieurs bobines par exemple à base de cuivre.

La machine électrique tournante comprend un rotor monté en rotation à l'intérieur du stator autour d'un axe de rotation. L'unité de stator comprend un carter protégeant le stator.

Au sens de l'invention, « axial », « axialement » se rapportent à une direction suivant une parallèle à l'axe de rotation C.

L'unité de stator comprend un capteur de température 1 comportant une première extrémité 3 reliée à deux fils électriques 4, 5.

Les fils électriques 4, 5 sont également reliés à un connecteur électrique destiné à être connecté à un dispositif de contrôle (non représenté).

Les fils électriques 4, 5 sont entourés individuellement d'une gaine de protection en polymère.

L'unité de stator comprend un support 6 sur lequel est fixé le capteur de température 1 par des moyens de fixation 7, 15.

Dans les exemples des figures 1 à 5, le support 6 est un dispositif de mesure de position 6' comprenant un compartiment de capteur 31 destiné à loger au moins un capteur de position 33 mesurant la position du rotor par rapport au stator.

Le dispositif de mesure de position 6' est destiné à être positionné radialement à l'intérieur du bobinage, et en regard d'une cible en rotation fixée au rotor, de façon à permettre au capteur de position 33 de détecter la cible.

Ce type de support 6 est utilisé pour des machines électriques à refroidissement par eau. Le capteur de température 1 est en contact de l'air et est positionné à proximité du bobinage, radialement à l'intérieur du stator et axialement entre une extrémité du rotor et un palier d'un carter de la machine électrique tournante. Le palier est positionné à une extrémité axiale de la machine électrique tournante. Le dispositif de mesure de position 6' est ainsi positionné dans une zone d'extrémité axiale du rotor.

Le dispositif de mesure de position 6' comprend un bras de fixation 36 faisant saillie par rapport au compartiment de capteur 31 vers l'axe de rotation du rotor. Dans cet exemple, le bras de fixation 36 est perpendiculaire au compartiment de capteur 31.

Le bras de fixation 36 est destiné à être fixé sur le palier du carter de la machine électrique tournante. Le support 6 ou dispositif de mesure de position 6' est donc fixe par rapport au stator.

Le bras de fixation 36 comprend une extrémité 39 munie d'un orifice 40 ayant un axe central C destiné à être aligné avec l'axe de rotation du rotor.

Selon ce mode de réalisation particulier, le bras de fixation 36 comprend une plaque de fixation 37 en forme de « C » à son extrémité 39 pour le fixer sur le palier. Deux orifices 38 sont prévus sur la plaque de fixation 37.

En variante, le bras de fixation 36 peut ne pas comprendre de plaque de fixation 37.

Le compartiment de capteur 31 présente une forme incurvée avec une courbure ayant pour axe de courbure l'axe central C.

Le compartiment de capteur 31 comprend une partie supérieure 34 prolongée par une partie inférieure 32, suivant une direction longitudinale Z, de plus faible largeur. Les capteurs de position 33 sont logés dans la partie inférieure 32.

La direction longitudinale Z est de préférence parallèle à l'axe de rotation C, comme représentée sur les figures 1, 2, 4 et 5. La partie supérieure est par exemple la partie la plus éloignée du rotor.

En variante, la direction longitudinale Z n'est pas parallèle à l'axe de rotation C. La partie supérieure 34 peut comprendre un dispositif électronique 41 telle une carte électronique ou un connecteur.

Les capteurs de position 33 peuvent être des capteurs à effet Hall détectant la position et mesurant la vitesse du rotor au moyen d'aimants disposés dans la cible fixée au rotor, par exemple. D'autres types de capteur de position peuvent être utilisés comme des capteurs optiques.

Le capteur de température 1 comprend une sonde de température de type CTN (Coefficient de Température Négatif) ou de type CTP (Coefficient de Température Positif). Ces sondes CTN et CTP sont des thermistances reliées aux deux fils électriques 4, 5 dont la résistance varie en fonction de la température. D'autres types de capteurs de température peuvent être utilisés comme des thermocouples

Ces sondes de température sont enveloppées dans un embout 35 pour protéger la thermistance. L'embout 35 contient de préférence du PTFE.

D'autres types de sondes sont possibles, avec ou sans embout contenant du PTFE.

Selon l'invention, les moyens de fixation 7, 15 comprennent des moyens de blocage 9, 10 immobilisant au moins l'un des fils électriques 4, 5 du capteur de température 1 pour bloquer le déplacement du capteur de température 1 par rapport au support 6 ou dispositif de mesure de position 6'.

Les moyens de fixation 7, 15 sont obtenus lors d'une opération de moulage du dispositif de mesure de position 6' de façon à les intégrer au dispositif de mesure de position 6' et former une pièce moulée unique.

Les moyens de fixation 7, 15, le compartiment de capteur 31 et le bras de fixation 36 sont donc formés ensemble lors du moulage pour former un même ensemble. Cet ensemble est en plastique.

Les moyens de fixation 7, 15 et le capteur de température 1 sont positionnés sur le compartiment de capteur 31. Plus précisément, les moyens de fixation 7, 15 et le capteur de température 1 sont positionnés sur une face externe 42 de la partie supérieure 34 du compartiment de capteur 31. La face externe 42 est localisée du côté opposé à celui du bras de fixation 36. Le bras de fixation 36 s'étend suivant une direction X.

Les moyens de fixation 7, 15 comprennent un logement 7 (ou compartiment) dans lequel est inséré le capteur de température 1. Le logement 7 est délimité par une paroi périphérique 8 dont les dimensions par rapport à celles du capteur de température 1 sont choisies pour limiter son déplacement par rapport au dispositif de mesure de position 6. Les dimensions du logement 7 sont proches de celles du capteur de température 1.

La section du capteur de température 1 est légèrement plus petite que celle du logement 7 de façon à ce que la paroi périphérique 8 vienne en contact avec l'embout 35 du capteur de température 1. Ainsi, la paroi périphérique 8 maintient le capteur de température 1 bloqué suivant au moins deux directions X et Y, perpendiculaires entre elles et par rapport à la direction longitudinale Z.

Le capteur de température 1 et le logement 7 présentent une forme allongée et s'étendent suivant la direction longitudinale Z.

Le capteur de température 1 et le logement 7 présentent une forme parallélépipédique dans l'exemple des figures 1 à 5. D'autres formes sont possibles comme des formes cylindriques, par exemple.

Dans l'exemple des figures 1 à 5, un seul des fils électriques 4, 5 est immobilisé formant un fil électrique bloqué 5.

En variante, les deux fils électriques 4, 5 forment un faisceau de fils immobilisé par les moyens de fixation 7, 15.

Ce qui est décrit par la suite pour un fil électrique s'applique également à plusieurs fils électriques ou un faisceau de fils électriques entouré d'une gaine. La faisceau ou câble de fils électriques est immobilisé par les moyens de fixation 7, 15.

Plusieurs câbles de fils électriques peuvent être immobilisés par les moyens de fixation 7, 15.

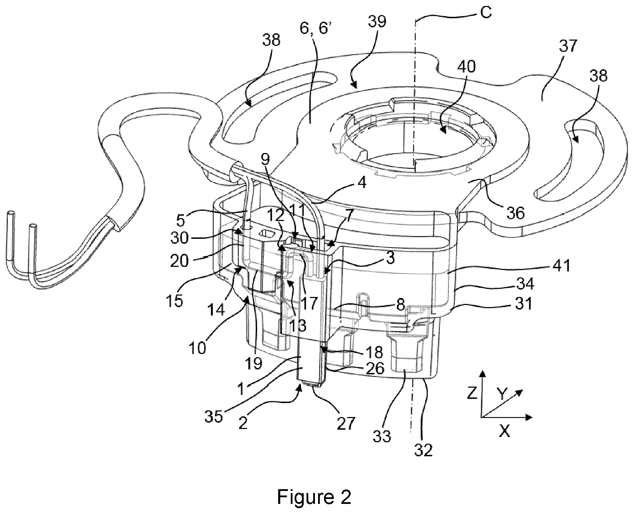

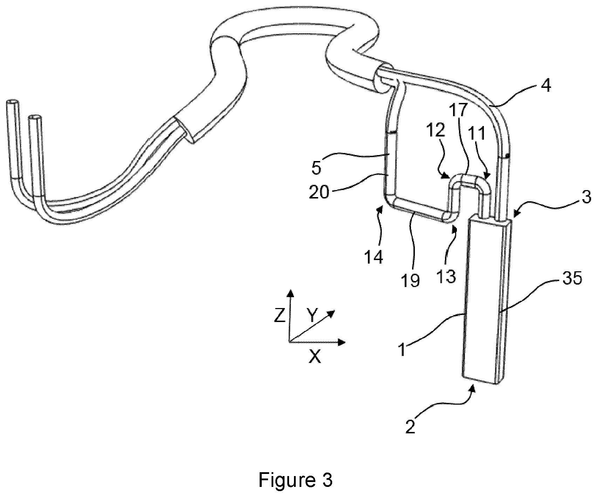

Le fil électrique bloqué 5 traverse les moyens de fixation 7, 15 de façon à former un chemin de blocage dans lequel le fil électrique bloqué 5 présente au moins une courbure 11, 12, 13, 14 entrainant un changement d'orientation, comme illustré sur les figures 2 et 3.

De préférence, le fil électrique bloqué 5 traverse les moyens de fixation 7, 15 de façon à former un chemin de blocage dans lequel le fil électrique bloqué 5 présente au moins deux courbures 11, 12, 13, 14 entrainant au moins deux changements d'orientation.

Avantageusement, le fil électrique bloqué 5 est entrelacé dans les moyens de fixation 7, 15 de façon à former un chemin de blocage en forme de « S ».

Dans l'exemple des figures 1 à 5, les courbures 11, 12, 13, 14 sont représentées avec des angles droits et des sections de fil rectilignes à titre illustratif pour simplifier la représentation. En pratique, le fil électrique bloqué 5 suit plutôt une succession de courbures.

Le fil électrique bloqué 5 suit une première direction opposée au logement 7 et sensiblement parallèle à la direction Y, perpendiculaire à la direction longitudinale Z, formant une première courbure 11 à proximité de la première extrémité 3 du capteur de température 1.

Le fil électrique bloqué 5 suit ensuite une deuxième direction, sensiblement parallèle à la direction longitudinale Z, vers le logement 7, formant une deuxième courbure 12.

Le fil électrique bloqué 5 suit ensuite une troisième direction opposée au logement 7 et sensiblement parallèle à la direction Y, formant une troisième courbure 13.

Le fil électrique bloqué 5 suit enfin une quatrième direction, sensiblement parallèle à la direction longitudinale Z, suivant une direction opposée au logement 7, formant une quatrième courbure 14 avant de ressortir des moyens de fixation 7, 15.

Comme dit précédemment, la frontière entre les courbures 11, 12, 13, 14 n'est pas franche dans la pratique.

En variante, d'autres schémas de chemin de blocage sont possibles avec plus ou moins de courbures.

Les moyens de blocage 9, 10 comprennent un premier élément de blocage 9 pour bloquer ou maintenir une première portion de fil 17 localisé entre les première 11 et deuxième courbure 12 sur la figure 2.

La paroi périphérique 8 du logement 7 comprend une fente 21 s'étendant suivant la direction longitudinale Z et qui est délimitée par deux bords 22, 23 opposés formant le premier élément de blocage 9.

Le logement 7 présente une forme parallélépipédique de section rectangulaire. La paroi périphérique 8 qui le délimite comprend trois cloisons 44, 45, 46 dont une première cloison latérale 44, une deuxième cloison latérale 45 opposée, une cloison avant 46 et une cloison arrière 47 formée par une partie de la face externe 42 de la partie supérieure 34 du compartiment de capteur 31, comme représentées sur la figure 1.

La fente 21 est formée sur la première face latérale 44.

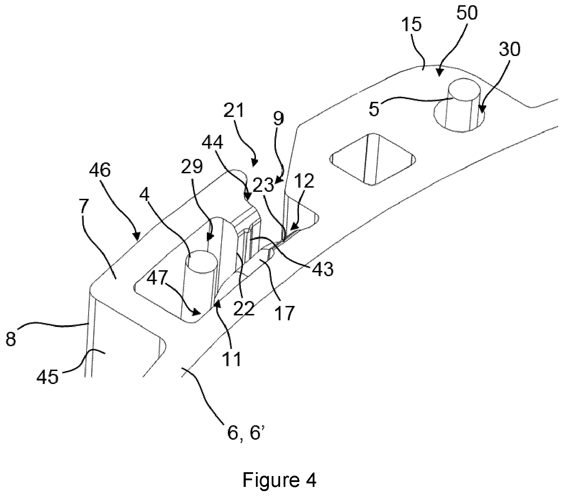

La première portion de fil 17 est pincée entre les deux bords 22, 23 de façon à ce que la gaine de protection entourant le fil électrique soit légèrement déformée. Un premier bords 22 comprend une nervure 43 ayant une section en forme de « V », par exemple et comme illustrée sur la figure 4, pour améliorer la tenue de la première portion de fil 17.

En variante, le premier élément de blocage 9 peut être un orifice ou autre.

Les moyens de fixation 7, 15 comprennent un élément de fixation 15 positionné sur le support 6. L'élément de fixation 15 est adjacent au logement 7. L'élément de fixation 15 est positionné en face de la première face latérale 44 du logement 7.

L'élément de fixation 15 et le logement 7 forment une protubérance sur la face externe 42 de la partie supérieure 34 du compartiment de capteur 31.

L'élément de fixation 15 présente une forme générale parallélépipédique.

Les moyens de blocage 9, 10 comprennent un deuxième élément de blocage 10 pour bloquer une deuxième portion de fil 19 distante de la première portion de fil 17, comme illustrée sur la figure 2.

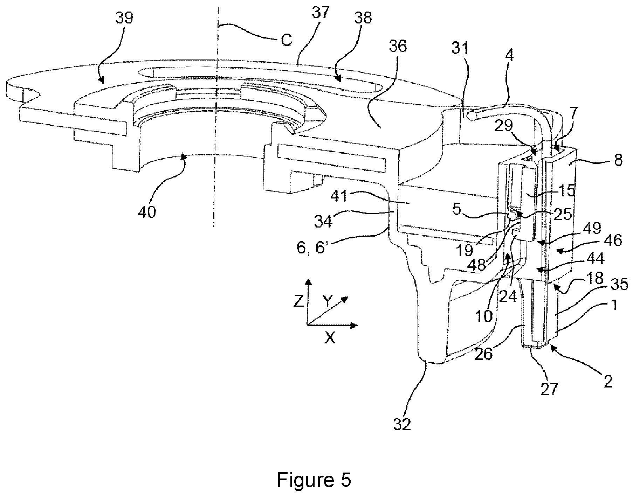

Le deuxième élément de blocage 10 comprend un ergot 24, comme illustré sur la figure 5, maintenant la deuxième portion de fil 19 bloquée entre une surface d'appui inférieure 25 prévue sur l'élément de fixation 15 et l'ergot 24.

L'ergot 24 est positionné à une partie inférieure 49 de l'élément de fixation 15. L'ergot 24 forme un clip. Pour introduire la deuxième portion de fil 19 entre l'ergot 24 et la surface d'appui inférieure 25, la deuxième portion de fil 19 est poussée contre la face externe de l'ergot 24 qui se déforme pour laisser passer le fil.

La deuxième portion de fil 19 se retrouve immobilisée entre la surface d'appui inférieure 25, une surface supérieure 48 de l'ergot 24 et une portion de la face externe 42 de la partie supérieure 34 du compartiment de capteur 31.

D'autres types de deuxième élément de blocage 10 sont possibles.

L'élément de fixation 15 comprend un canal 30 traversé par le fil électrique bloqué 5. Le canal 30 débouche de l'élément de fixation 15 par une face supérieure 50 de l'élément de fixation 15, comme illustrée sur la figure 4.

Le canal 30 est sensiblement parallèle à la fente 21 et donc à la direction longitudinale Z.

Le logement 7 comprend une première ouverture 29 par laquelle est inséré le capteur de température 1.

La paroi périphérique 8 du logement 7 est prolongée, suivant la direction longitudinale Z et selon un sens opposé à la première ouverture 29, par une patte 26 reliée au support 6 et comportant un rebord 27.

Le rebord 27 fait saillie par rapport à la patte 26 de façon à former une butée pour la deuxième extrémité 2 du capteur de température 1.

Ainsi, une portion du capteur de température 1 ressort du logement 7 par une deuxième ouverture 18 opposée à la première ouverture 29.

Le fil électrique non bloqué 4 ressort par la première ouverture 29.

Ce qui est décrit ci-dessus pour une unité de stator de machine électrique refroidie à l'eau s'applique également à une unité de stator de machine électrique refroidie à l'huile ayant un support 6 positionné en appui sur une face externe du bobinage (non représenté).

Le support 6 comprend des moyens de fixation 7, 15 et des moyens de blocage 9, 10 immobilisant au moins l'un des deux fils électriques 4, 5 du capteur de température 1 pour bloquer le déplacement du capteur de température 1 par rapport au support 6, tels que décrit précédemment.

Les moyens de fixation 7, 15 sont obtenus lors d'une opération de moulage du support 6 de façon à les intégrer au support 6 et former une pièce unique.

Ce qui suit ci-dessous décrit un procédé de montage du capteur de température 1 sur le support 6.

Le capteur de température 1 est inséré dans la première ouverture 29 du logement 7 suivant la direction longitudinale Z.

La paroi périphérique 8 du logement 7 permet de bloquer le mouvement du capteur de température 1 selon au moins les directions X et Y perpendiculaires à la direction longitudinale Z.

Le rebord 27 du logement 7 permet également de retenir le mouvement du capteur de température 1 suivant la direction longitudinale Z mais seulement dans un sens à l'opposé à la première ouverture 29.

L'un des fils électriques 4, 5 du capteur de température 1, appelé fil électrique bloqué 5, est immobilisé par des moyens de blocage 9, 10 pour bloquer le mouvement du capteur de température 1 suivant au moins la direction longitudinale Z.

L'autre fil électrique 5 du capteur de température 1, appelé fil électrique non bloqué 4, ressort par la première ouverture 29 du logement 7.

L'opération d'immobilisation du fil électrique bloqué 5 est décrite ci-dessous.

Une première courbure 11 est donnée au fil électrique bloqué 5 dans une direction opposée au logement 7 pour l'insérer dans la fente 21 du logement 7.

Une première portion de fil 17 est alors bloquée suivant au moins la direction longitudinale Z.

Le fil électrique bloqué 5 ressort alors du logement 7.

Une deuxième courbure 12 est donnée au fil électrique bloqué 5 dans une direction parallèle au logement 7 avant de lui redonner une troisième courbure 13 dans une direction opposée au logement 7.

Une quatrième courbure 12 est ensuite donnée au fil électrique bloqué 5 dans une direction parallèle au logement 7.

Une portion 20 du fil électrique bloqué 5 est insérée dans le canal 30 de l'élément de fixation 15 pour ressortir par la face supérieure 50 de l'élément de fixation 15.

Une deuxième portion de fil 19 est ensuite clipsée dans l'ergot 24, bloquant cette deuxième portion de fil 19 suivant au moins la direction longitudinale Z.

Le support 6 est ensuite monté sur la machine électrique et les deux fils électriques 4, 5 sont connectés à un connecteur.

## Revendications

1. Unité de stator pour machine électrique tournante comprenant un stator comportant au moins un bobinage, un capteur de température (1) comprenant une première extrémité (3) reliée à deux fils électriques (4, 5) destinés à être connectés à un dispositif de contrôle, et un support (6), sur lequel est fixé le capteur de température (1) par des moyens de fixation (7, 15), comprenant un logement (7) dans lequel est disposé le capteur de température (1), le logement (7) étant délimité par une paroi périphérique (8) dont les dimensions par rapport à celles du capteur de température (1) sont choisies pour limiter le déplacement du capteur de température par rapport au support (6), **caractérisée en ce que** les moyens de fixation (7, 15) comprennent des moyens de blocage (9, 10) immobilisant au moins l'un des deux fils électriques (4, 5) du capteur de température (1) pour bloquer le déplacement du capteur de température (1) par rapport au support (6), les moyens de fixation (7, 15) étant obtenus lors d'une opération de moulage du support (6) de façon à les intégrer au support (6) et former une pièce unique.

2. Unité de stator selon la revendication 1, **caractérisée en ce que** l'au moins un fil électrique (4, 5) immobilisé traverse les moyens de fixation (7, 15) de façon à former un chemin de blocage dans lequel l'au moins un fil électrique (4, 5) présente au moins une courbure (11, 12, 13, 14) entrainant un changement d'orientation.

3. Unité de stator selon la revendication 2, **caractérisée en ce que** l'au moins un fil électrique (4, 5) immobilisé est entrelacé dans les moyens de fixation (7, 15) de façon à former un chemin de blocage en forme de « S ».

4. Unité de stator selon l'une quelconque des revendications 1 à 3, **caractérisée en ce que** les moyens de blocage (9, 10) comprennent un premier élément de blocage (9) pour bloquer une première portion de fil (17).

5. Unité de stator selon la revendication 4, **caractérisée en ce que** le logement (7) et le capteur de température (1) s'étendent suivant une direction longitudinale (Z), la paroi périphérique (8) du logement (7) comprenant une fente (21) s'étendant suivant la direction longitudinale (Z) et délimitée par deux bords (22, 23) opposés formant le premier élément de blocage (9).

6. Unité de stator selon l'une quelconque des revendications 1 à 5, **caractérisée en ce que** les moyens de fixation (7, 15) comprennent un élément de fixation (15) positionné sur le support (6), l'élément de fixation (15) étant adjacent au logement (7).

7. Unité de stator selon la revendication 6, **caractérisée en ce que** les moyens de blocage (9, 10) comprennent un deuxième élément de blocage (10) pour bloquer une deuxième portion de fil (19) distante de la première portion de fil (17).

8. Unité de stator selon la revendication 7, **caractérisée en ce que** le deuxième élément de blocage (10) comprend un ergot (24) maintenant la deuxième portion de fil (19) bloquée entre une surface d'appui inférieure (25) prévue sur l'élément de fixation (15) et l'ergot (24).

9. Unité de stator l'une quelconque des revendications 6 à 8, **caractérisée en ce que** l'élément de fixation (15) comprend un canal (30) traversé par l'au moins un fil électrique (4, 5) immobilisé.

10. Unité de stator selon l'une quelconque des revendications 1 à 9, **caractérisée en ce que** le logement (7) comprend une première ouverture (29) pour l'insertion du capteur de température (1), la paroi périphérique (8) du logement (7) étant prolongée, suivant la direction longitudinale (Z) et selon un sens opposé à la première ouverture (29), par une patte (26) reliée au support (6) et comportant un rebord (27), le rebord (27) faisant saillie par rapport à la patte (26) de façon à former une butée pour la deuxième extrémité (2) du capteur de température (1).

11. Unité de stator selon l'une quelconque des revendications 1 à 10, **caractérisée en ce que** les deux fils électriques (4, 5) forment un faisceau de fils immobilisé par les moyens de blocage (9, 10).

12. Unité de stator selon l'une quelconque des revendications 1 à 11, **caractérisée en ce que** le support (6) est un dispositif de mesure de position (6') comprenant un compartiment de capteur (31) destiné à loger au moins un capteur de position (33) mesurant la position du rotor par rapport au stator, le dispositif de mesure de position (6') étant destiné à être positionné dans une zone d'extrémité axiale du rotor de façon à permettre au capteur de position (33) de détecter une cible en rotation reliée au rotor, les moyens de fixation (7, 15) et le capteur de température (1) étant positionnés sur le compartiment de capteur (31).

13. Machine électrique tournante **caractérisée en ce qu'**elle comprend une unité de stator telle que définie selon l'une quelconque des revendications 1 à 12 et un rotor monté en rotation à l'intérieur de l'unité de stator.
